# EUROPEAN PATENT APPLICATION

(11) **EP 4 682 377 A1**
(43) Date of publication of application: **21.01.2026**
(21) Application number: 24382772.2
(22) Date of filing: 16.07.2024
(51) Int. Cl.: F03D 15/00, F03D 15/20, F03D 80/00

(54) **TORQUE TRANSMISSION SYSTEM FOR A SLIP RING UNIT OF A WIND TURBINE AND METHOD OF ASSEMBLY OF A SLIP RING UNIT**

(71) Applicant: General Electric Renovables España S.L., 08005 Barcelona (ES)
(72) Inventor: SANCHEZ ALARCON, Juan, 08005 Barcelona (ES); GARCIA MOLINA, Victor Manuel, 08005 Barcelona (ES); PALOMARES RENTERO, Pedro, 08005 Barcelona (ES)
(74) Representative: Bardehle Pagenberg S.L.

(57) **Abstract**

The present disclosure is related to a torque transmission system (203) for a slip ring unit (200) The slip ring unit (200) is configured for being mounted along a rotational axis (30) of the wind turbine rotor (18). The slip ring unit (200) comprises an encoder, a rotating part (201) configured for connection to a rotating component of the wind turbine and a static part (202) configured for connection to a static component of the wind turbine. The torque transmission system (203) is configured for connecting the rotating part (201) of the slip ring unit (200) to the rotating component of the wind turbine while having a degree of freedom in an axial and/or in a radial direction. Furthermore, the torque transmission system (203) is configured to prevent relative displacement between the rotating part (201) of the slip ring unit (200) and the rotating component of the wind turbine in a tangential direction. The present disclosure also relates to methods (100) of assembly of a slip ring unit (200) in a wind turbine.

## Description

### FIELD

The present disclosure relates to torque transmission systems for a slip ring unit of a wind turbine. The present disclosure further relates to methods of assembly of slip ring units in wind turbines and, more particularly, in direct drive wind turbines.

### BACKGROUND

Modern wind turbines are commonly used to supply electricity into the electrical grid. Wind turbines of this kind generally comprise a tower and a rotor arranged on the tower. The rotor, which typically comprises a hub and a plurality of blades, is set into rotation under the influence of the wind on the blades. Said rotation generates a torque that is normally transmitted through a rotor shaft to a generator, either directly ("directly driven" or "gearless") or through the use of a gearbox. This way, the generator produces electricity which can be supplied to the electrical grid.

Components like the gearbox (if present), the generator, the converter, the transformer, electrical power cables, cooling systems and structures (e.g. bedplate and frames) may be partly or completely housed in a nacelle. The nacelle generally sits on top of a yaw bearing, which allows it to rotate to maintain the nacelle and rotor aligned with the wind direction.

A slip ring unit, also called a rotary electrical joint, is commonly arranged to enable seamless transfer of data signals and power between the static parts of the nacelle and the rotating parts of the wind turbine. In particular, a slip ring is typically used to provide control signals and power from the static nacelle to the blade pitch actuators arranged in the rotating hub. Furthermore, data transmission may also be used from the hub and blades to the nacelle for monitoring the state of the wind turbine blades or other rotating components.

In some cases, rotational position and/or speed sensors, e.g. encoders, may be integrated in slip ring units. Such units may be used to provide position and speed information by generating a series of electrical pulses. In this manner, the position of the rotor hub with respect to the nacelle and the rotational speed of the wind turbine rotor may be determined. These measurements can be used by a wind turbine controller for different purposes such as: wind turbine overspeed control, wind turbine speed regulation for power capture optimization and/or dynamic load reduction, wind turbine speed control for the monitoring of blade sensors, safe positioning of the wind turbine rotor during parking, etc.

In a direct drive wind turbine, rotation is transmitted directly from the rotor hub to the generator rotor. In order to support the weight of the generator and the hub, a static frame may be provided. In some wind turbine configurations, the hub (and generator rotor) is connected to a rotatable shaft. The rotatable shaft is arranged to rotate about the static frame. One or more bearings can be provided between the rotatable shaft and the static frame.

Slip ring units in direct drive wind turbines are typically arranged inside the static frame. A static part of the slip ring unit is commonly attached to the static frame such that the axis of the slip ring is substantially aligned with the rotational axis of the wind turbine. The rotating part of the slip ring unit is connected to a rotating part of the wind turbine, such as the rotor hub or, if present, the rotatable shaft. A torque transmission system is typically employed to connect the rotating part of the slip ring unit to the rotating part of the wind turbine and to transfer the rotating torque.

As wind turbines increase in size, manufacturing and assembly process tolerances also become larger. Furthermore, the distances between the slip ring unit and the respective connections to the static and rotating parts of the wind turbine also increase significantly. This is especially the case for the connection between the rotating part of the slip ring unit and the anchor point at the rotating part, e.g. rotor hub or rotatable shaft. Hence, tolerances can result in non-perfectly circular geometries, which translate into changing radial lengths between the anchor point of the torque transmission system to the rotating component of the wind turbine and the connection to the slip ring unit.

Besides, small axial displacements can also occur during rotation of the wind turbine due to tolerances and loads induced in the bearing system rotatably supporting the rotating parts of the wind turbine on the static frame.

Overall, displacements during wind turbine operation impose a challenge on the efficient performance of the slip ring unit. In particular, high loads may be experienced at the connections of the torque transmission system, which can eventually damage the torque transmission system, the slip ring unit, and/or the anchor points.

Furthermore, distorted position and/or speed signals can be obtained by corresponding rotational sensors, e.g. encoders, integrated in the slip ring unit. As a result, additional sensors are typically arranged in conventional wind turbines to implement the required control functions.

The present disclosure provides systems and methods to overcome at least partially some of the aforementioned drawbacks.

### SUMMARY

In an aspect of the present disclosure, a torque transmission system for a slip ring unit of a wind turbine is provided. The slip ring unit is configured for being mounted along a rotational axis of a wind turbine rotor. The slip ring unit comprises: an encoder, a rotating part configured for connection to a rotating component of the wind turbine, and a static part configured for connection to a static component of the wind turbine. The torque transmission system is configured for connecting the rotating part of the slip ring unit to the rotating component of the wind turbine while having a degree of freedom in an axial direction and/or in a radial direction. The torque transmission system is further configured to prevent relative displacement between the rotating part of the slip ring unit and the rotating component of the wind turbine in a tangential direction.

According to this aspect of the disclosure, axial and/or radial relative displacements between the rotating part of the slip ring unit and the rotating component of the wind turbine, e.g. the rotor hub or rotatable shaft, are absorbed by the torque transmission system. Such radial and/or axial displacements may occur during wind turbine operation due to mechanical tolerances and/or deformations induced by loads acting on the wind turbine.

The absorption of axial and/or radial displacements provides structural integrity in the system. Otherwise, high strength forces may damage different components such as the slip ring unit, the anchor points of the transmission system to the respective static and rotating components, and/or the torque transmission system itself.

The torque transmission system is further configured to prevent relative displacements between the rotating part of the slip ring unit and the rotating component of the wind turbine in the tangential direction of the rotation. The avoidance of movement in the tangential direction results in pure torque transmission from the rotating component of the wind turbine to the rotating part of the slip ring. In this manner, the rotation of the rotating part of the slip ring exactly matches the rotation of the wind turbine rotor. Consequently, speed fluctuations and/or differences in the rotational angular positions are avoided.

Indeed, inventors have found that designs providing degrees of freedom in all directions, e.g. by means of spherical bearings, are not adequate for certain applications. In particular, such systems may provide a feasible solution for the mere transfer of data and power signals. However, the existence of a degree of freedom in the tangential direction results in fluctuations or distortions in the position and/or speed signals obtained when a sensor, e.g. an encoder, is integrated in the slip ring unit. If used in a wind turbine controller, such distorted signals can have significant deleterious effects that limit both the efficiency of the wind turbine and its operational safety. Among others, position and/or rotational speed distortions can induce false overspeed trips, non-detection of real overspeed events, insufficient accuracy of the rotor azimuthal position during rotor locking, loads increase, or improper tracking of the power curve of the wind turbine. As a consequence, the use of additional sensors is typically required in some prior-art wind turbines to ensure reliable and safe operation of the wind turbine.

By restricting the degree of freedom in the tangential direction, the mentioned limitations are overcome and the azimuthal position and the rotational speed of the wind turbine rotor can be reliably determined. More accurate control is achieved, which allows improving power capture while dynamically reducing loads. Overall, the efficiency and the safety of the wind turbine are improved and, among other aspects, the need for redundant or additional sensing devices is eliminated or, at least, reduced.

A degree of freedom in a given direction may herein be understood as allowing a relative movement in the given direction of one component with respect to another. A degree of freedom may be established through the use of specific materials (e.g. materials with flexibility or resiliency in a given direction) and/or a kinematic coupling (e.g. allowing sliding, or gliding in one direction, while preventing relative movement in another).

In another aspect of the present disclosure, a wind turbine is provided. The wind turbine comprises a wind turbine rotor having a rotational axis. The wind turbine further comprises a slip ring unit mounted along the rotational axis. The slip ring unit comprises an encoder, a rotating part connected to a rotating component of the wind turbine, and a static part connected to a static component of the wind turbine. The rotating part of the slip ring unit is coupled to the rotating component of the wind turbine. The coupling is such that the rotating part of the slip ring unit is allowed to perform a limited movement relative to the rotating component of the wind turbine in an axial direction and/or in a radial direction, while preventing movement of the rotating part of the slip ring unit relative to the rotating component of the wind turbine in a tangential direction.

According to this aspect of the present disclosure, a wind turbine is obtained which can take advantage of the previously mentioned aspect of the disclosure. In an example, the wind turbine may comprise a direct drive, or gearless, wind turbine. The mentioned distortion effects on the position and speed readings may become more prevalent for large wind turbine with a direct drive, or gearless, configuration. According to the present disclosure, such wind turbines may be designed and operated in a more efficient manner to increase energy yield while also improving the safety of the different components of the wind turbine.

Furthermore, the slip ring unit may be arranged in an area close to both a static component of the wind turbine, e.g. a static frame, and a rotating component of the wind turbine, so that it can be connected in a more convenient manner. In particular, the rotating component of the wind turbine may be any component of a wind turbine rotor such as the rotor hub, or a component operatively connected to the wind turbine rotor such as a generator rotor, or a rotatable shaft.

In an example comprising a direct drive wind turbine, the slip ring unit may be mounted along a rotational axis of the wind turbine rotor, i.e. along a centre axis of the wind turbine, and it may be located in a region close to the interface between the static frame and the rotor hub. The static part of the slip ring may be connected to the static frame and the rotating part of the slip ring may be connected to the rotatable shaft (if present), the latter being rotatably mounted on the static frame by means of one or more bearings. In this manner, the distance of the torque transmission system between the slip ring unit and the rotating component of the wind turbine may be optimized, i.e. minimized.

In an additional aspect, a method of assembly of a slip ring comprising an encoder in a wind turbine is provided. The method comprises providing the slip ring unit and providing a torque transmission system. The method further comprises connecting a static part of the slip ring unit to a static component of the wind turbine and connecting a rotating part of the slip ring unit to a rotating component of the wind turbine. Connecting the rotating part of the slip ring unit to the rotating component of the wind turbine comprises connecting through the torque transmission system such that a degree of freedom is provided in an axial direction and/or in a radial direction while preventing relative displacement between the rotating part of the slip ring unit and the rotating component of the wind turbine in a tangential direction. In an example, the method may comprise assembly in a direct drive wind turbine.

According to this additional aspect of the disclosure, a versatile assembly of the slip ring unit is provided. The resulting slip ring arrangement exhibits the above-mentioned advantages.

Additional objects, advantages and features of embodiments of the present disclosure will become apparent to those skilled in the art upon examination of the description, or may be learned by practice.

Throughout the present disclosure, an axial direction is understood as a direction aligned with the rotational axis of the wind turbine rotor. Such axial direction may be substantially, but not necessarily, horizonal. Thus, in some wind turbines, a certain tilting may be implemented, in which case the axis of rotation of the wind turbine rotor and, consequently, the axial direction, may also become slightly tilted with respect to the horizontal.

On the other hand, a radial direction is understood as a direction contained in the plane of rotation. The plane of rotation may be substantially vertical, but not necessarily exactly vertical. In this disclosure, a radial direction corresponds to a direction that points towards or away from the center of rotation. The center of rotation substantially corresponds to the center of the slip ring unit when the slip ring unit is positioned along the rotational axis of the wind turbine rotor.

Finally, a tangential direction is understood as a direction in the plane of rotation and perpendicular to the radial direction at any given point along the path of the rotation. The tangential direction might also be described as a circumferential direction.

In other words, given a certain point defining a circular path, a radial direction is understood as a direction connecting the point to the center of the circle around which the point is rotating whereas a tangential direction is contained in the plane of rotation and is perpendicular to the radial direction at the corresponding point.

### BRIEF DESCRIPTION OF THE DRAWINGS

Non-limiting examples of the present disclosure will be described in the following, with reference to the appended drawings, in which:
Figure 1 schematically illustrates a perspective view of one example of a wind turbine;
Figure 2 illustrates an example of a hub and a nacelle of a wind turbine;
Figure 3 schematically illustrates a cross-sectional view of an example of a direct drive wind turbine comprising a slip ring unit;
Figures 4A and 4B schematically illustrate two examples of the mounting of a slip ring unit and the corresponding relevant directions;
Figure 5 schematically illustrates an example of an arrangement of a slip ring unit in a direct drive wind turbine;
Figure 6 schematically illustrates a rotational speed measurement obtained with an encoder arranged in a slip ring unit, the slip ring unit not being mounted according to the present disclosure;
Figures 7A-7C schematically illustrate an example of a torque transmission system according to an example of the disclosure;
Figure 8 schematically illustrates an example of a torque transmission system according to another example of the disclosure;
Figure 9 schematically illustrates an example of a torque transmission system according to a further example of the disclosure;
Figures 10A-10B schematically illustrate an example of a torque transmission system according to still another example of the disclosure;
Figure 11 shows a flowchart of an example of a method for assembly of a slip ring unit in a wind turbine.

### DETAILED DESCRIPTION OF EXAMPLES

Reference now will be made in detail to embodiments of the disclosure, one or more examples of which are illustrated in the drawings. Each example is provided by way of explanation, not as a limitation. In fact, it will be apparent to those skilled in the art that various modifications and variations can be made in the present disclosure without departing from the scope or spirit of the teaching. For instance, features illustrated or described as part of one embodiment can be used with another embodiment to yield a still further embodiment. Thus, it is intended that the present disclosure covers such modifications and variations as come within the scope of the appended claims and their equivalents.

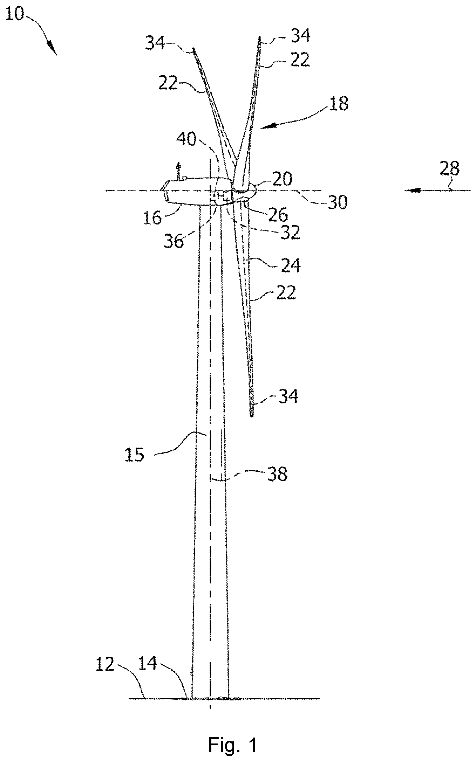

Figure 1 is a perspective view of an example of a wind turbine 10. In the example, the wind turbine 10 is a horizontal-axis wind turbine. Alternatively, the wind turbine 10 may be a vertical-axis wind turbine. In the example, the wind turbine 10 includes a tower 15 that extends from a support system 14 on a ground 12, a nacelle 16 mounted on tower 15, and a rotor 18 that is coupled to nacelle 16. The rotor 18 includes a rotatable hub 20 and at least one rotor blade 22 coupled to and extending outwards from the hub 20. In the example, the rotor 18 has three rotor blades 22. In an alternative embodiment, the rotor 18 includes more or less than three rotor blades 22. The tower 15 may be fabricated from tubular steel to define a cavity (not shown in figure 1) between a support system 14 and the nacelle 16. In an alternative embodiment, the tower 15 is any suitable type of a tower having any suitable height. According to an alternative, the tower can be a hybrid tower comprising a portion made of concrete and a tubular steel portion. Also, the tower can be a partial or full lattice tower.

The rotor blades 22 are spaced about the hub 20 to facilitate rotating the rotor 18 to enable kinetic energy to be transferred from the wind into usable mechanical energy, and subsequently, electrical energy. The rotor blades 22 are mated to the hub 20 by coupling a blade root portion 24 to the hub 20 at a plurality of load transfer regions 26. The load transfer regions 26 may have a hub load transfer region and a blade load transfer region (both not shown in figure 1). Loads induced to the rotor blades 22 are transferred to the hub 20 via the load transfer regions 26.

In examples, the rotor blades 22 may have a length ranging from about 15 meters (m) to about 90 m or more. Rotor blades 22 may have any suitable length that enables the wind turbine 10 to function as described herein. For example, non-limiting examples of blade lengths include 20 m or less, 37 m, 48.7 m, 50.2m, 52.2 m or a length that is greater than 91 m. As wind strikes the rotor blades 22 from a wind direction 28, the rotor 18 is rotated about a rotor axis 30. As the rotor blades 22 are rotated and subjected to centrifugal forces, the rotor blades 22 are also subjected to various forces and moments. As such, the rotor blades 22 may deflect and/or rotate from a neutral, or non-deflected, position to a deflected position.

Moreover, a pitch angle of the rotor blades 22, i.e., an angle that determines an orientation of the rotor blades 22 with respect to the wind direction, may be changed by a pitch system 32 to control the load and power generated by the wind turbine 10 by adjusting an angular position of at least one rotor blade 22 relative to wind vectors. Pitch axes 34 of rotor blades 22 are shown. During operation of the wind turbine 10, the pitch system 32 may particularly change a pitch angle of the rotor blades 22 such that the angle of attack of (portions of) the rotor blades are reduced, which facilitates reducing a rotational speed and/or facilitates a stall of the rotor 18.

In the example, a blade pitch of each rotor blade 22 is controlled individually by a wind turbine controller 36 or by a pitch control system 80. Alternatively, the blade pitch for all rotor blades 22 may be controlled simultaneously by said control systems.

Further, in the example, as the wind direction 28 changes, a yaw direction of the nacelle 16 may be rotated about a yaw axis 38 to position the rotor blades 22 with respect to wind direction 28.

In the example, the wind turbine controller 36 is shown as being centralized within the nacelle 16, however, the wind turbine controller 36 may be a distributed system throughout the wind turbine 10, on the support system 14, within a wind farm, and/or at a remote-control center. The wind turbine controller 36 includes a processor 40 configured to perform the methods and/or steps described herein. Further, many of the other components described herein include a processor.

As used herein, the term "processor" is not limited to integrated circuits referred to in the art as a computer, but broadly refers to a controller, a microcontroller, a microcomputer, a programmable logic controller (PLC), an application specific, integrated circuit, and other programmable circuits, and these terms are used interchangeably herein. It should be understood that a processor and/or a control system can also include memory, input channels, and/or output channels.

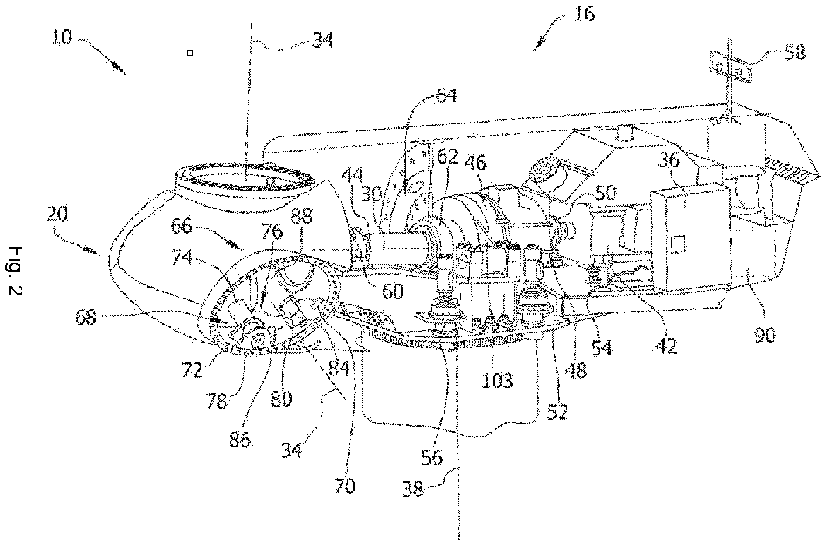

Figure 2 is an enlarged sectional view of a portion of the wind turbine 10. In the example, the wind turbine 10 includes the nacelle 16 and the rotor 18 that is rotatably coupled to the nacelle 16. More specifically, the hub 20 of the rotor 18 is rotatably coupled to an electric generator 42 positioned within the nacelle 16 by the main shaft 44, a gearbox 46, a high-speed shaft 48, and a coupling 50. In the example, the main shaft 44 is disposed at least partially coaxial to a longitudinal axis (not shown) of the nacelle 16. A rotation of the main shaft 44 drives the gearbox 46 that subsequently drives the high-speed shaft 48 by translating the relatively slow rotational movement of the rotor 18 and of the main shaft 44 into a relatively fast rotational movement of the high-speed shaft 48. The latter is connected to the generator 42 for generating electrical energy with the help of a coupling 50. Furthermore, a transformer 90 and/or suitable electronics, switches, and/or inverters may be arranged in the nacelle 16 in order to transform electrical energy generated by the generator 42 having a voltage between 400V to 1000 V into electrical energy having medium voltage (10 - 35 KV). Said electrical energy is conducted via power cables from the nacelle 16 into the tower 15.

The gearbox 46, generator 42 and transformer 90 may be supported by a main support structure frame of the nacelle 16, optionally embodied as a main frame 52. The gearbox 46 may include a gearbox housing that is connected to the main frame 52 by one or more torque arms 103. In the example, the nacelle 16 also includes a main forward support bearing 60 and a main aft support bearing 62. Furthermore, the generator 42 can be mounted to the main frame 52 by decoupling support means 54, in particular in order to prevent vibrations of the generator 42 to be introduced into the main frame 52 and thereby causing a noise emission source.

Optionally, the main frame 52 is configured to carry the entire load caused by the weight of the rotor 18 and components of the nacelle 16 and by the wind and rotational loads, and furthermore, to introduce these loads into the tower 15 of the wind turbine 10. The rotor shaft 44, generator 42, gearbox 46, high speed shaft 48, coupling 50, and any associated fastening, support, and/or securing device including, but not limited to, support 52, and forward support bearing 60 and aft support bearing 62, are sometimes referred to as a drive train 64.

In some examples, the wind turbine may be a direct drive wind turbine without gearbox 46. Generator 42 operate at the same rotational speed as the rotor 18 in direct drive wind turbines. They therefore generally have a much larger diameter than generators used in wind turbines having a gearbox 46 for providing a similar amount of power than a wind turbine with a gearbox.

The nacelle 16 may also include a yaw drive mechanism 56 that may be used to rotate the nacelle 16 and thereby also the rotor 18 about the yaw axis 38 to control the perspective of the rotor blades 22 with respect to the wind direction 28.

For positioning the nacelle 16 appropriately with respect to the wind direction 28, the nacelle 16 may also include at least one meteorological measurement system 58 which may include a wind vane and anemometer. The meteorological measurement system 58 can provide information to the wind turbine controller 36 that may include wind direction 28 and/or wind speed. In the example, the pitch system 32 is at least partially arranged as a pitch assembly 66 in the hub 20. The pitch assembly 66 includes one or more pitch drive systems 68 and at least one sensor 70. Each pitch drive system 68 is coupled to a respective rotor blade 22 (shown in figure 1) for modulating the pitch angle of a rotor blade 22 along the pitch axis 34. Only one of three pitch drive systems 68 is shown in figure 2.

In the example, the pitch assembly 66 includes at least one pitch bearing 72 coupled to hub 20 and to a respective rotor blade 22 (shown in figure 1) for rotating the respective rotor blade 22 about the pitch axis 34. The pitch drive system 68 includes a pitch drive motor 74, a pitch drive gearbox 76, and a pitch drive pinion 78. The pitch drive motor 74 is coupled to the pitch drive gearbox 76 such that the pitch drive motor 74 imparts mechanical force to the pitch drive gearbox 76. The pitch drive gearbox 76 is coupled to the pitch drive pinion 78 such that the pitch drive pinion 78 is rotated by the pitch drive gearbox 76. The pitch bearing 72 is coupled to pitch drive pinion 78 such that the rotation of the pitch drive pinion 78 causes a rotation of the pitch bearing 72.

Pitch drive system 68 is coupled to the wind turbine controller 36 for adjusting the pitch angle of a rotor blade 22 upon receipt of one or more signals from the wind turbine controller 36. In the example, the pitch drive motor 74 is any suitable motor driven by electrical power and/or a hydraulic system that enables pitch assembly 66 to function as described herein. Alternatively, the pitch assembly 66 may include any suitable structure, configuration, arrangement, and/or components such as, but not limited to, hydraulic cylinders, springs, and/or servomechanisms. In certain embodiments, the pitch drive motor 74 is driven by energy extracted from a rotational inertia of hub 20 and/or a stored energy source (not shown) that supplies energy to components of the wind turbine 10.

The pitch assembly 66 may also include one or more pitch control systems 80 for controlling the pitch drive system 68 according to control signals from the wind turbine controller 36, in case of specific prioritized situations and/or during rotor 18 overspeed. In the example, the pitch assembly 66 includes at least one pitch control system 80 communicatively coupled to a respective pitch drive system 68 for controlling pitch drive system 68 independently from the wind turbine controller 36. In the example, the pitch control system 80 is coupled to the pitch drive system 68 and to a sensor 70. During normal operation of the wind turbine 10, the wind turbine controller 36 may control the pitch drive system 68 to adjust a pitch angle of rotor blades 22.

According to an embodiment, a power generator 84, for example comprising a battery and electric capacitors, is arranged at or within the hub 20 and is coupled to the sensor 70, the pitch control system 80, and to the pitch drive system 68 to provide a source of power to these components. In the example, the power generator 84 provides a continuing source of power to the pitch assembly 66 during operation of the wind turbine 10. In an alternative embodiment, power generator 84 provides power to the pitch assembly 66 only during an electrical power loss event of the wind turbine 10. The electrical power loss event may include power grid loss or dip, malfunctioning of an electrical system of the wind turbine 10, and/or failure of the wind turbine controller 36. During the electrical power loss event, the power generator 84 operates to provide electrical power to the pitch assembly 66 such that pitch assembly 66 can operate during the electrical power loss event.

In the example, the pitch drive system 68, the sensor 70, the pitch control system 80, cables, and the power generator 84 are each positioned in a cavity 86 defined by an inner surface 88 of hub 20. In an alternative embodiment, said components are positioned with respect to an outer roof surface of hub 20 and may be coupled, directly or indirectly, to the outer roof surface.

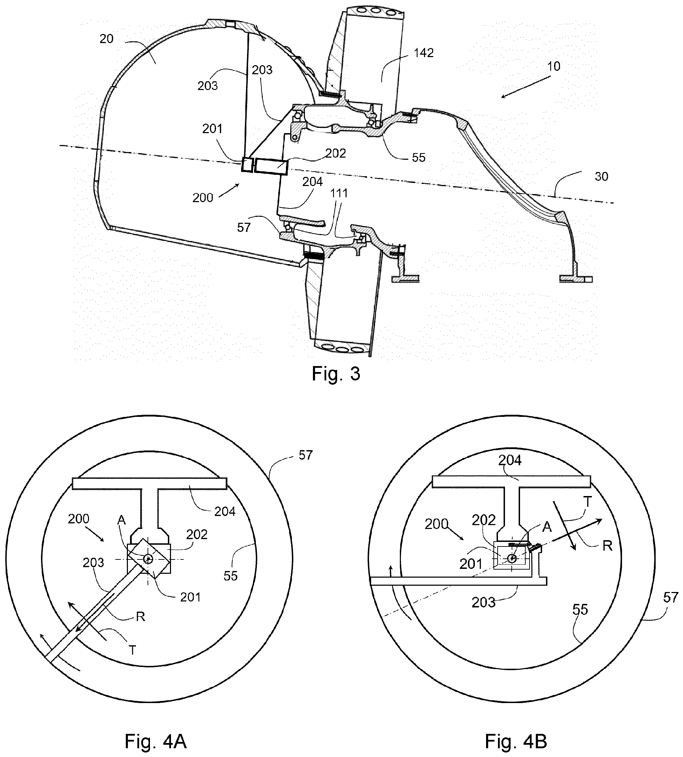

Figure 3 shows a cross-sectional view of an example of an assembly for a direct drive wind turbine. The assembly comprises a rotor hub 20, a generator rotor 142 (which obviously forms part of a generator with a corresponding stator), and a rotatable shaft 57 for supporting the generator rotor 142 on a static frame 55. One or more bearings 111 may be provided to rotatably support the rotatable shaft 57 (and the other rotating components of the wind turbine) on the static frame 55. Figure 3 schematically illustrates that the assembly further comprises a slip ring unit 200. The slip ring unit 200 comprises a static part 202 and a rotating part 201. The static part 202 of the slip ring unit 200 is configured for connection to a static component of the wind turbine. In this example, the static component of the wind turbine is the static frame 55. The rotating part 201 of the slip ring unit 200 is configured for connection to a rotating component of the wind turbine. Two different examples for the connection of the rotating part 201 are depicted in Figure 3. Hence, both a first connection to the rotor hub 20 and a second connection to the rotatable shaft 57 are shown. Nevertheless, it is understood that, in other examples, only one of such connections may be provided. Furthermore, in other examples, a connection to the generator rotor 142 may also be envisaged.

A bracket or support 204 may be employed to connect the static part 202 of the slip ring unit 200 to the static frame 55. On the other hand, a torque transmission system 203 is provided for the connection of the rotating part 201 to the rotating component of the wind turbine, e.g. to the rotor hub 20 and/or to the rotatable shaft 57.

The slip ring unit 200 comprises an encoder (not shown), which can be used to sense the position and/or rotational speed of the rotating component of the wind turbine, e.g. rotor hub 20, generator rotor 142, or rotatable shaft 57. As also shown in Figure 3, the slip ring unit 200 is configured for being mounted along a rotational axis 30 of the wind turbine 10 or, more particularly, of the wind turbine rotor. In this manner, the rotor hub 20, the generator rotor 142, the rotatable shaft 57, and the slip ring unit 200 may all comprise a common rotational axis 30.

Figures 4A and 4B schematically illustrate two examples of the mounting of a slip ring unit 200 and the main directions considered in the present disclosure. In particular, both figures depict a front view of the arrangement of a slip ring unit 200. The view corresponds to a view from a front end of the wind turbine 10.

The axial direction, labelled as "A", corresponds to the direction of the rotational axis 30 of the wind turbine rotor 18. On the other hand, the radial direction, labelled as "R", corresponds to the direction extending from the center of the rotating part 201 of the slip ring unit 200 along a radius of the circumference. In the example of Figure 4A, the torque transmission system 203 extends in a direction that substantially corresponds to the radial direction. Indeed, in such example, a projection of the torque transmission system 203 extends to the center of the slip ring unit 200. Figure 4B shows an example of a different mounting for the slip-ring unit 200. In this example, the main direction of the torque transmission system 203 is not aligned with the radial direction, R. Finally, the tangential direction, labelled as "T", is coplanar to the radial direction and perpendicular to it. As shown in Figures 4A and 4B, the tangential direction defines a tangent of the circumference described by the rotating movement. Different reasons, such as ergonomy or design of the slip ring unit 200, may result in an example like the one depicted in Figure 4A or in an example like the one depicted in Figure 4B. Nevertheless, regardless of the specific orientation of the torque transmission system 203, the definition of the axial (A), radial (R), and tangential (T) directions remains the same.

According to the present disclosure, the torque transmission system 203 is configured for connecting the rotating part 201 of the slip ring unit 200 to the rotating component of the wind turbine while having a degree of freedom in an axial (A) and/or in a radial (R) direction. Furthermore, the torque transmission system 203 is configured to prevent relative displacements between the rotating part 201 of the slip ring unit 200 and the rotating component of the wind turbine in a tangential direction (T).

The provision of degrees of freedom mitigates the effects of potential changes in the radial length between the rotating part 201 of the slip ring unit 200 and the rotating component of the wind turbines during rotation of the wind turbine 10. Such changes may arise from both tolerances and operational loads. Furthermore, relative displacements between the rotating part 201 of the slip ring unit 200 and the wind turbine rotating parts may also arise from axial displacements in the bearings 111. Such degrees of freedom may be provided by means of a coupling element

In particular, in an example of the disclosure, the torque transmission system 203 may have a degree of freedom in the axial direction and also in the radial direction. Thus, the ability of the torque transmission system 203 to absorb relative displacements in the radial and in the axial direction simultaneously may be advantageous to compensate multiple effects occurring at the same time, which may induce significant stress on the slip ring unit 200. Thus, radial displacements may arise from non-perfectly circular parts or arrangements resulting from machining and/or assembly tolerances. On the other hand, dynamic axial relative displacements may result from loads acting on the wind turbine during operation. Different examples of torque transmission systems 203 providing such degrees of freedom will be described below.

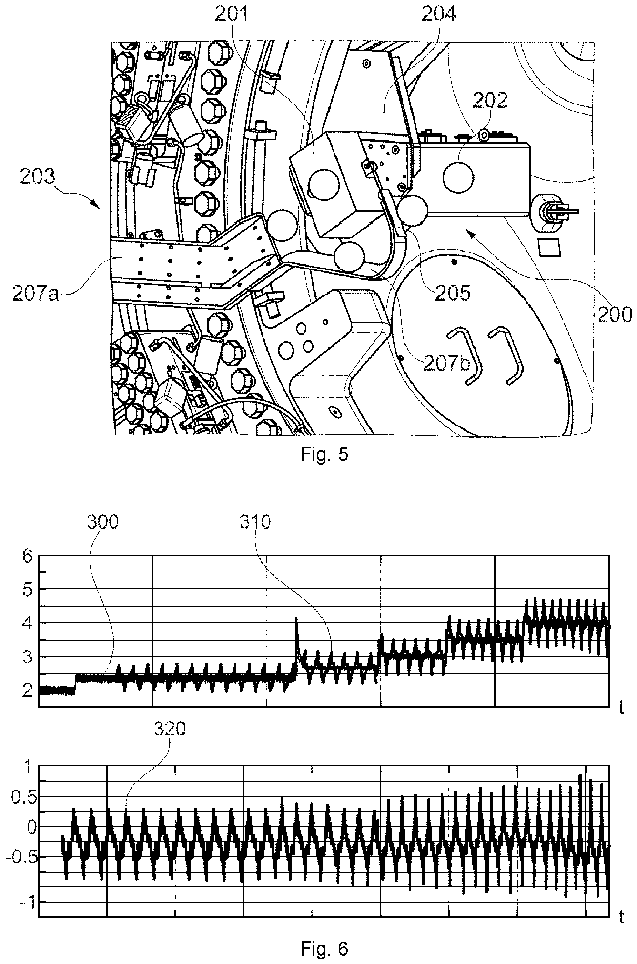

Figure 5 provides a more detailed view of an assembly of a slip ring unit 200 according to an example. In particular, a single support 204 for connecting the static part 202 of the slip ring unit 200 may be provided and the slip ring unit 200 may be arranged in a suspended configuration. The support 204 may be anchored to the static frame 55 at one or more points (not shown) in a front region of the static frame 55. In this manner, the slip ring unit 200 may be located close to the interface between the static frame 55 and the rotating component of the wind turbine, e.g. rotor hub 20 or rotatable shaft 57. Consequently, connection of the rotating part 201 of the slip ring unit 200 may be facilitated.

As also shown in Figure 5, the torque transmission system 203 may be configured to guide one or more cables (not shown) from the rotating part 201 of the slip ring unit 200. Thus, as depicted in Figure 5, the torque transmission system 203 may comprise a tray shaped transmission arm 207a (or at least, a portion of the transmission arm may be tray-shaped), which may be dimensioned to support the weight of one or more cables connecting the rotating part 201 of the slip ring unit 200 to different components, such as, blade pitch actuators or blade sensors. In this manner, a convenient and optimum guiding of the cables may be provided without the need of any additional component. Depending on the type and size of the cables, different tray supports may be employed. In particular, stiffer tray supports may be employed when guiding power cables than when guiding only data cables.

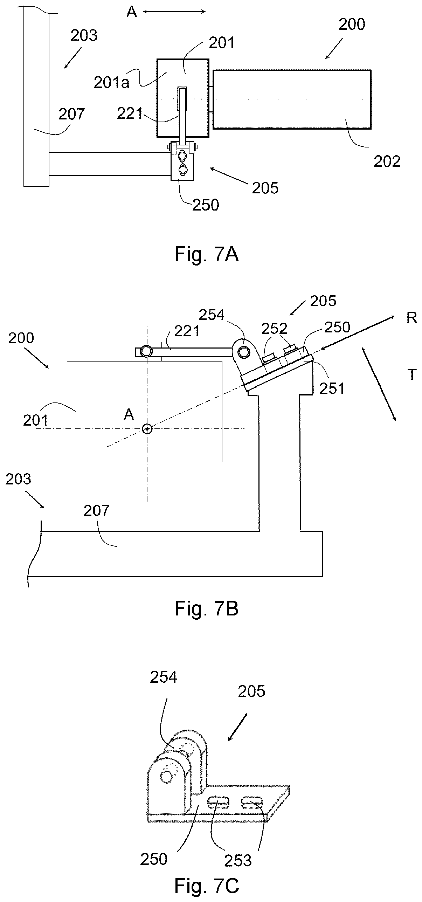

Figure 5 shows that the torque transmission system 203 may comprise, in an example, a transmission arm 207a, 207b and a coupling element 205. A first end of the transmission arm 207a, 207b may be configured for connection to the rotating component of the wind turbine. The coupling element 205 may be configured for connection between a second end of the transmission arm 207a, 207b and the rotating part 201 of the slip ring unit 200. Such coupling element 205 may be designed and arranged to accommodate one or more degrees of freedom so as to enable relative displacements in the axial and/or radial directions between the rotating part 201 of the slip ring unit 200 and the rotating component of the wind turbine, while preventing movements in the tangential direction. Different configurations may be envisaged for the coupling element 205 as shown in more detail below with reference to Figures 7-10.

Furthermore, in other examples (not shown in the figures), the torque transmission system 203 may also comprise a transmission arm and a coupling element, but the coupling element may be configured for connection between the rotating component of the wind turbine and the first end of the transmission arm. Then, the second end of the transmission arm may be directly connected to the rotating part of the slip ring unit. As in the previous example, the coupling element may be configured to accommodate relative displacements in the axial and/or radial directions while preventing displacements in the tangential direction.

In still further examples, two different coupling elements may be provided. A first coupling element may be configured for connecting the rotating component of the wind turbine with a first end of a transmission arm and a second coupling element may be configured for connecting the second end of the transmission arm with the rotating part 201 of the slip ring unit 200. Again, the coupling elements may be configured to accommodate relative displacements in the axial and/or radial directions while preventing displacements in the tangential direction.

As also shown in Figure 5, the transmission arm 207 of the torque transmission system 203 may comprise a plurality of parts 207a, 207b. The parts 207a, 207b may be fixedly connected to each other. Thus, in an example, the transmission arm 207 may comprise a first part 207a, which may be configured as not only a torque transmission arm but also as a cable tray, and a second part 207b, which may be shaped to better adjust to the dimensions of the different parts, e.g. the rotating part 201 of the slip ring unit 200. In this manner, an optimum connection with the slip ring unit 200 may be achieved.

Figure 6 (above figure) schematically depicts the evolution of the wind turbine rotational speed 310 as determined with an encoder arranged in the slip ring unit 200, which is not mounted according to the present disclosure (i.e. it is mounted according to the prior art). The signal received from the encoder is compared with a rotational speed 300 estimated from the electronic power converter. Figure 6 (below figure) depicts the absolute error (in rpms) of the speed 310 determined with the encoder. As shown in Figure 6, significant oscillations and errors can be clearly seen when mounting the slip ring unit according to the prior art.

In particular, Figure 6 was obtained while using a similar configuration to the one depicted in Figure 5 but with a coupling element comprising spherical bearings at both ends. As a result, not only axial and radial relative displacements are permitted, but also relative movements in the tangential direction are allowed. Thus, even if such design may be adequate for the mere transfer of power and data signals, the resulting speed (and position) is clearly showing undesired fluctuations.

Cyclic oscillations of the detected speed 310 are visible in Figure 6. These cyclic oscillations coincide in frequency with wind turbine rotor revolutions, and they are primarily produced by a misalignment between the axis of the slip ring unit on which the encoder is mounted and the axis of the wind turbine rotor. Such misalignment between axes may be corrected by arranging an elastic coupling in the slip ring unit between the main shaft of the slip ring unit, i.e. the shaft receiving the torque, and a secondary shaft on which the encoder may be mounted. Such elastic couplings to correct misalignment between axes are known by those skilled in the art so no further technical details will be provided herein. Specifically, couplings like Bellows couplings, double loop couplings, or Helix couplings may be employed to compensate for the misalignment between axes.

Besides, additional random oscillations of small amplitude and higher frequency are also observed during wind turbine rotation. Such random oscillations are produced by the relative movement between the rotating part 201 of the slip ring unit 200 and the torque transmission system 203 in the tangential direction.

Such oscillations in the detected speed 310 may result in a number of undesired effects. Those include, among others, false overspeed trips, overspeed events not being captured, insufficient rotor position accuracy for rotor locking, load increase and/or non-optimum tracking of the power curve. Overall, the provision of a coupling element allowing degrees of freedom in all directions is not adequate when using an encoder in the slip ring unit 200.

For that reason, and as already mentioned above, the examples of the present disclosure comprise torque transmission systems 203 that prevent any relative displacement in the tangential direction, i.e. degrees of freedom are provided in the axial and/or radial directions but not in the tangential direction. In this manner, only torque is transmitted to the rotating part 201 of the slip ring unit 200 by the torque transmission system 203 and the high frequency oscillations shown in Figure 6 are mitigated.

Figures 7A-7C schematically depict an example of a torque transmission system 203 and, more particularly, of a coupling element 205, configured to provide degrees of freedom in the axial (A) and radial (R) direction, but not in the tangential (T) direction. In particular, Figure 7A schematically depicts an upper view of the assembly whereas Figure 7B provides a front view of the assembly. Finally, Figure 7C provides a more detailed view of the coupling element 205 itself. Furthermore, it is noted that the example shown in Figures 7A-7C also corresponds to the previously mentioned example depicted in Figure 4B. Hence, in this example, the main direction of the torque transmission system 203 is not aligned with the radial direction, R, as already explained in reference to Figure 4B or as also shown in Figure 7B.

In this example, the torque transmission system 203 may comprise a coupling element 205 which may comprise a coupling plate 250 configured for connection to the second end of the transmission arm 207. The coupling plate 250 may be configured to slide in a radial direction with respect to the transmission arm 207. Thus, the slidable connection may allow displacements in a radial direction while preventing any displacement in the tangential direction. Consequently, the rotation of the rotating part 201 of the slip ring unit 200 and, accordingly, of the slip ring shaft, may substantially match the rotation of the wind turbine rotor. In an example, the coupling plate 250 may be connected to a side wall 201a of the rotating part 201 of the slip ring unit 200. To this end, a mechanical interface may be provided. In examples like the one depicted in Figures 7A-7C, the coupling plate 250 may not be directly connected to the side wall 201a of the rotating part 201, but an extension bracket 221 may be employed to facilitate the connection.

As shown in Figure 7B, in order to permit sliding in the radial direction, the coupling element 205 and, more particularly, the coupling plate 250, may be mounted in an inclined surface at the second end of the torque arm 207. The inclined surface may be such that the plane of the coupling plate 250 may be substantially aligned with the radial, R, direction and, consequently, perpendicular to the tangential, T, direction. In this manner, a degree of freedom may be provided in the radial direction while preventing movement in the tangential direction.

In examples, the torque transmission system 203 may comprise one or more fasteners 252 connecting the second end of the transmission arm 207 to the coupling plate 250. The fasteners 252 may be arranged in elongated holes 253 of the coupling plate 250. The elongated holes 253 may extend along the radial direction when in a mounted state. Alternatively, or in addition, the torque transmission system 203 may comprise, as also shown in Figures 7A-7C, a Clevis coupling 254 (or equivalent coupling) connecting the coupling plate 250 to the rotating part 201 of the slip ring unit 200. As known by those skilled in the art, a Clevis coupling 254 is a mechanical joint that typically comprises a U-shaped or forked piece with holes at the ends of the arms, into which a pin is inserted. The Clevis coupling 254 may be configured to provide a degree of freedom in the axial direction as more clearly seen in Figure 7A. Other type of connections, capable of providing such degree of freedom, may also be envisaged in other variants.

Accordingly, the coupling element 205 may be designed and assembled to allow axial and/or radial movements to a certain extent determined by the dimensions of the holes 253 and by the design of the Clevis coupling 254.

In particular, the coupling plate 250 may comprise one or more holes 253 for connection to the second end of the transmission arm 207 and a Clevis coupling 254 (or equivalent) for connection to the rotating part 201 of the slip ring unit 200. The holes 253 for connection to the second end of the transmission arm 207 may have an elongated shape extending in a radial direction, whereas the Clevis coupling 254 for connection to the rotating part 201 of the slip ring unit 200 may be configured to provide a degree of freedom in the axial direction. In this particular example, both axial and radial deviations may be absorbed.

Furthermore, in order to improve the performance of the system shown in the example of Figures 7A-7C, a low friction 251 may be arranged between the coupling plate 250 and the second end of the transmission arm 207. Such low friction element 251 may be provided to facilitate sliding between the different parts. In an example, the low friction element 251 may comprise graphite inserts. In other examples, other low friction material may be provided. Furthermore, in still other examples, a surface treatment may be carried out on the respective surfaces or a lining may be provided on a surface. In examples like the one depicted in Figures 7A-7C, the coupling plate 250 may not be directly attached to the side wall 201a of the rotating part 201 but an extension bracket 221 may be employed to facilitate the connection.

Regarding the coupling plate 250 and the fasteners 252, brass may be used due to its resistance to corrosion and low friction properties.

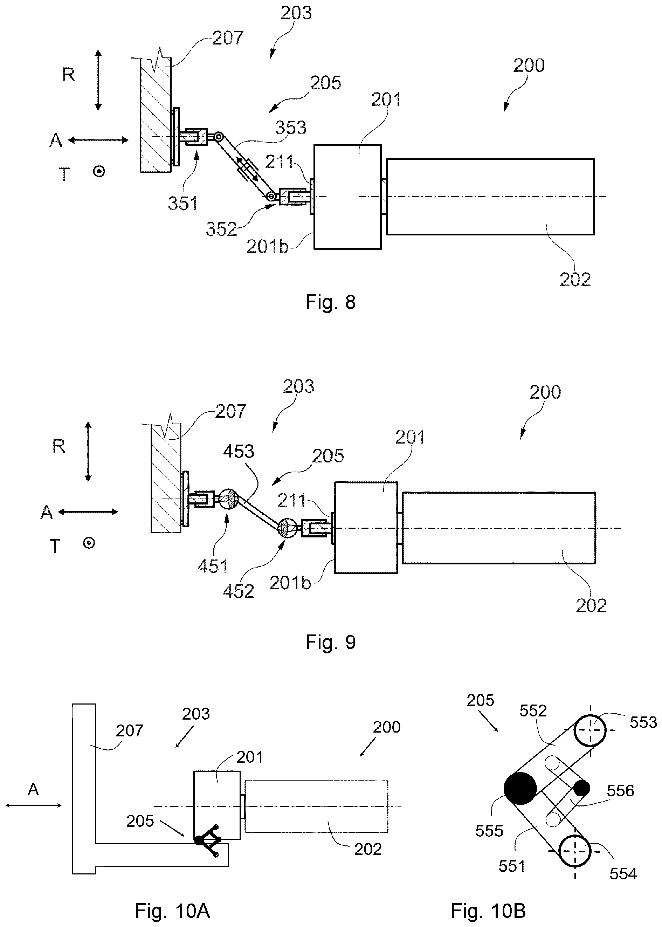

Figure 8 schematically depicts a top view of another example of a torque transmission system 203, comprising a coupling element 205 that provides degrees of freedom in the axial, A, and radial, R, direction, but not in the tangential, T, direction. In this example, the coupling element 205 may comprise a first universal joint 351 and a second universal joint 352 connected by a sliding intermediate shaft 353. The first universal joint 351 may be configured for connection to the second end of the transmission arm 207 and the second universal joint 352 may be configured for connection to the rotating part 201 of the slip ring unit 200 and, more specifically, to a front wall 201b of the rotating part 201 of the slip ring unit 200 at a position substantially aligned with a rotational axis of the rotating part 201 of the slip ring unit 200.

According to this example, the double universal joint, i.e. the first universal joint 351 and the second universal joint 352 connected with the intermediate shaft 353, may provide a uniform speed transfer from the transmission arm 207 to the rotating part 201 of the slip ring unit 200 and, consequently, to the encoder arranged within the slip ring unit 200. As described with reference to Figure 3, the rotational axis of the rotating part 201 of the slip ring unit 200 may be substantially coincident with the rotational axis 30 of the wind turbine rotor 18. Furthermore, the intermediate shaft 353 may be sliding, e.g. telescopic. In other words, the intermediate shaft 353 may adjust, within certain limits, its length. In this manner, the coupling element 205 may adapt to different relative positions between the rotating part 201 of the slip ring unit 200 and the transmission arm 207, such that relative movements in the axial and radial direction may be permitted.

In a variant of this example, the first universal joint 351 and the second universal joint 352 may have a ninety degrees offset. Moreover, an angle of the first universal joint 351 with respect to the intermediate shaft 353 may be substantially the same as an angle of the second universal joint 352 with respect to the intermediate shaft 353. This configuration may be preferable to provide a one-to-one relationship between the rotational speeds at both sides of the double universal joint, i.e. between the driving transmission arm 207 and the driven rotating part 201 of the slip ring unit 200. Accordingly, an encoder arranged within the slip ring unit 200 may copy or match the rotation of the rotating component of the wind turbine connected at the opposite end of the torque transmission system 203.

Figure 9 schematically depicts still another example of the disclosure. In this example, the torque transmission system 203 may comprise a coupling element 205 with a first 451 and a second 452 homokinetic joints connected by an intermediate shaft 453. The first 451 homokinetic joint may be configured for connection to the second end of the transmission arm 207 whereas the second 452 homokinetic joint may be configured for connection to the rotating part 201 of the slip ring unit 200. In an example, the second 452 homokinetic joint may be configured for connection at a front wall 201b at a position substantially aligned with a rotating axis of the rotating part 201 of the slip ring unit 200. A connection interface 211 may be provided in the rotating part 201 of the slip ring unit 200 to enable such connection.

According to this example, the homokinetic joints 451, 452 may be configured to absorb variations in length in the radial and axial directions while not allowing relative movements in the tangential direction. Accordingly, the angular speed of the driven shaft, i.e. the shaft of the rotating part 201 of the slip ring unit 200, may match the angular speed of the driving shaft, i.e. the angular speed of the transmission arm 207. Similarly to the example described with reference to Figure 8, the two homokinetic joints 451, 452 may also be phased in relation to each other to provide a uniform transfer of rotational speed from the first 451 to the second 452 homokinetic joint.

Figures 10A-10B provide a further example of a torque transmission system 203 according to the present disclosure. In particular, Figure 10A provides a general upper view of the arrangement whereas Figure 10B provides a more detailed view of the coupling element 205. In this example, the coupling element 205 may comprise a first 551 and a second 552 leg. A first end of the first leg 551 may be configured for fixed connection to the second end of the transmission arm 207, whereas a first end of the second leg 552 may be configured for fixed connection to the rotating part 201 of the slip ring unit 200. The second end of the first leg 551 and the second end of the second leg 552 may be connected at a pivot point 555. Fasteners 553, 554 may be used for the corresponding connections to the transmission arm 207 and the rotating part 201 of the slip ring unit 200.

The pivot point 555 may be configured to move in the plane defined by the axial, A, and radial, R, directions but not in the tangential, T, direction. Accordingly, the coupling element 205 may be such that the pivot point 555 may be configured to facilitate relative movement between the first end of the first leg 551 and the first end of the second leg 552 in the axial and in the radial direction while preventing relative movement in the tangential direction. Accordingly, only torque may also be transmitted in this case by the torque transmission system 203. In order to improve the robustness of the system, a further articulated joint 556 may be added to the system, i.e. in a pantograph-like arrangement.

Examples described with reference to Figures 7 to 10 have shown coupling elements 205 arranged between the rotating part 201 of the slip ring unit 200 and a second end of a transmission arm 207. Nevertheless, it is understood that equivalent systems may be envisaged wherein such coupling elements 205 may be arranged between a first end of a transmission arm 207 and a rotating component of the wind turbine. In such examples, either a direct connection between the transmission arm 207 and the rotating part 201 of the slip ring unit 200 or a connection via a further coupling element 205 may be envisaged. In all cases, the coupling elements 205 may be configured as having a degree of freedom in the axial and/or in the radial directions while preventing movements in the tangential direction.

In another aspect of the disclosure, a wind turbine comprising a slip ring unit and a torque transmission system according to any of the previously described examples may be provided. The wind turbine may be a direct drive wind turbine and the rotating component of the wind turbine may comprise a rotor hub, a generator rotor, or a rotatable shaft. According to this aspect of the disclosure, a wind turbine with enhanced performance and safety may be obtained by providing a reliable and efficient sensing of both rotor position and speed.

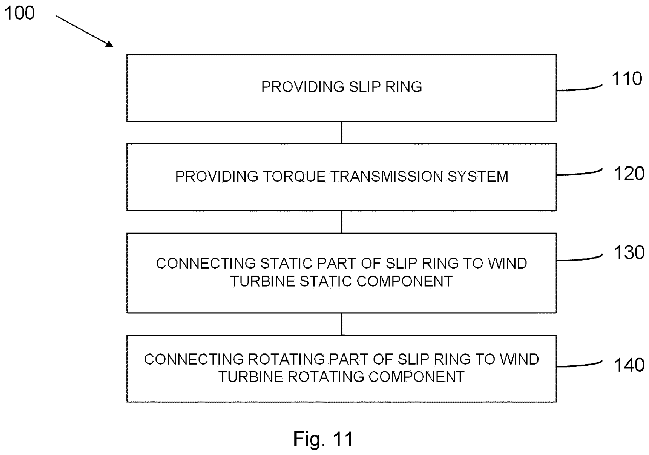

In still another aspect of the disclosure, a method 100 of assembly of a slip ring unit comprising an encoder in a wind turbine, specifically in a direct drive wind turbine, is provided as shown in the flowchart of Figure 11. The method 100 comprises providing the slip ring unit and a torque transmission system in blocks 110 and 120. The method 100 also comprises, in block 130, connecting a static part of the slip ring unit to a static component of the wind turbine. Block 140 comprises connecting a rotating part of the slip ring unit to a rotating component of the wind turbine. Besides, connecting a rotating part of the slip ring unit to a rotating component of the wind turbine comprises connecting via the torque transmission system such that a degree of freedom is provided in an axial direction and/or in a radial direction while preventing relative displacement between the rotating part of the slip ring unit and the rotating component of the wind turbine in a tangential direction.

According to this method 100, a convenient mounting of the slip ring unit is achieved, which allows accurate determination of the position and the rotational speed of the wind turbine rotor while mitigating the effects of system deformations. In particular, the provision of certain degrees of freedom permits absorption of such deformation whereas the restriction of movement in the tangential direction provides accurate measurements.

In an example of the method, the torque transmission system may comprise a coupling element and a transmission arm with a first end and a second end. Accordingly, connecting the rotating part of the slip ring unit to the rotating component of the wind turbine in block 140 may comprise connecting the first end of the transmission arm to the rotating component of the wind turbine and connecting the coupling element between the second end of the transmission arm and the rotating part of the slip ring unit. Alternatively, connecting the rotating part of the slip ring unit to the rotating component of the wind turbine may comprise connecting the coupling element between the rotating component of the wind turbine and the first end of the transmission arm and connecting the second end of the transmission arm to the rotating part of the slip ring unit.

By providing such a coupling element, a more versatile method may be obtained. Thus, a substantially conventional transmission arm may be employed whereas a coupling element may be designed with the required features to enable the desired degree(s) of freedom while preventing tangential movement. Such split between the transmission arm and the coupling elements may provide enhanced versatility to the system while also facilitating the assembly process.

In a variant of the method 100, connecting the rotating part of the slip ring unit via the torque transmission system may comprise connecting the torque transmission system to a side wall of the rotating part of the slip ring unit.

Attachment to a side of the rotating part of the slip ring unit may facilitate connection in certain designs of the torque transmission system. Furthermore, in this variant, the rotating part of the slip ring may comprise a simple external housing with some input/output connectors arranged on one or more of the walls of the housing.

In still another variant of the method 100, connecting the rotating part of the slip ring unit via the torque transmission system may comprise connecting the torque transmission system to a front wall of the rotating part of the slip ring unit at a position substantially aligned with a rotational axis of the rotating part of the slip ring unit.

This variant may be particularly useful depending on the nature of the torque transmission system and, more specifically, of the coupling element. In this variant, a rotatable shaft of the slip ring unit may be arranged protruding from the front wall of the rotating part of the slip ring so as to enable connection with the torque transmission system.

This written description uses examples to disclose the teaching, including the preferred embodiments, and also to enable any person skilled in the art to practice the teaching, including making and using any devices or systems and performing any incorporated methods. The patentable scope is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims. Aspects from the various embodiments described, as well as other known equivalents for each such aspects, can be mixed and matched by one of ordinary skill in the art to construct additional embodiments and techniques in accordance with principles of this application. If reference signs related to drawings are placed in parentheses in a claim, they are solely for attempting to increase the intelligibility of the claim, and shall not be construed as limiting the scope of the claim.

## Claims

1. A torque transmission system (203) for a slip ring unit (200) of a wind turbine (10), the slip ring unit (200) configured for being mounted along a rotational axis (30) of a wind turbine rotor (18), and comprising an encoder, a rotating part (201) configured for connection to a rotating component of the wind turbine (10), and a static part (202) configured for connection to a static component of the wind turbine (10),
the torque transmission system (203) being configured for connecting the rotating part (201) of the slip ring unit (200) to the rotating component of the wind turbine (10) and having a degree of freedom in an axial direction and/or in a radial direction, and
the torque transmission system (203) being further configured to prevent relative displacement between the rotating part (201) of the slip ring unit (200) and the rotating component of the wind turbine (10) in a tangential direction.

2. The torque transmission system (203) of claim 1, wherein the torque transmission system (203) has a degree of freedom in the axial direction and also in the radial direction.

3. The torque transmission system (203) of any of claims 1 or 2, the torque transmission system (203) comprising a transmission arm (207) and a coupling element (205), a first end of the transmission arm (207) being configured for connection to the rotating component of the wind turbine (10), and the coupling element (205) being configured for connection between a second end of the transmission arm (207) and the rotating part (201) of the slip ring unit (200).

4. The torque transmission system (203) of claim 3, wherein the coupling element (205) comprises a coupling plate (250) configured for connection to the second end of the transmission arm (207), the coupling plate (250) being configured to slide in a radial direction with respect to the transmission arm (207).

5. The torque transmission system (203) of claim 4, comprising one or more fasteners (252) connecting the second end of the transmission arm (207) to the coupling plate (250), the fasteners (252) being arranged in elongate holes (253) of the coupling plate, the elongate holes (253) extending along the radial direction when in a mounted state.

6. The torque transmission system (203) of any of claims 4 or 5, wherein the coupling element (205) comprises a Clevis coupling (254) for connection to the rotating part (201) of the slip ring unit (200), the Clevis coupling (254) exhibiting a degree of freedom in the axial direction.

7. The torque transmission system (203) of claim 3, wherein the coupling element (205) comprises a first universal joint (351) and a second universal joint (352) connected by a sliding intermediate shat (353), the first universal joint (351) being configured for connection to the second end of the transmission arm (207), and the second universal joint (352) being configured for connection to the rotating part (201) of the slip ring unit (200).

8. The torque transmission system (203) of claim 7, wherein the first universal joint (351) and the second universal joint (352) have a ninety degrees offset, and further wherein an angle of the first universal joint (351) with respect to the intermediate shaft (353) is substantially the same as an angle of the second universal joint (352) with respect to the intermediate shaft (353).

9. The torque transmission system (203) of claim 3, wherein the coupling element (205) comprises a first (451) and a second (452) homokinetic joint connected by an intermediate shaft (453), the first homokinetic joint (451) being configured for connection to the second end of the transmission arm (207), and the second homokinetic joint (452) being configured for connection to the rotating part (201) of the slip ring unit (200).

10. The torque transmission system (203) of claim 3, wherein the coupling element (205) comprises a first (551) and a second (552) leg, a first end of the first leg (551) being configured for fixed connection to the second end of the transmission arm (207) and a first end of the second leg (552) being configured for fixed connection to the rotating part (201) of the slip ring unit (200), the second end of the first leg (551) and the second end of the second leg (552) being connected at a pivot point (555).

11. The torque transmission system (203) of claim 10, wherein the pivot point (555) is configured to facilitate relative movement between the first end of the first leg (551) and the first end of the second leg (552) in the axial and in the radial directions while preventing relative movement in the tangential direction.

12. A wind turbine (10) comprising a slip ring unit (200) and a torque transmission system (203) according to any previous claim, wherein the wind turbine (10) is a direct drive wind turbine, and the rotating component of the wind turbine (10) comprises a rotor hub (20), a generator rotor (142), or a rotatable shaft (57).

13. A method of assembly of a slip ring unit (200) comprising an encoder in a wind turbine (10), the method comprising:
providing the slip ring unit (200);
providing a torque transmission system (203);
connecting a static part (202) of the slip ring unit (200) to a static component of the wind turbine (10);
connecting a rotating part (201) of the slip ring unit (200) to a rotating component of the wind turbine (10);
wherein connecting the rotating part (201) of the slip ring unit (200) to the rotating component of the wind turbine (10) comprises connecting via the torque transmission system (203) such that a degree of freedom is provided in an axial direction and/or in a radial direction, while preventing relative displacement between the rotating part (201) of the slip ring unit (200) and the rotating component of the wind turbine (10) in a tangential direction.

14. The method of claim 13, the torque transmission system (203) comprising a coupling element (205) and a transmission arm (207) with a first end and a second end, wherein connecting the rotating part (201) of the slip ring unit (200) to the rotating component of the wind turbine (10) comprises
connecting the first end of the transmission arm (207) to the rotating component of the wind turbine (10) and connecting the coupling element (205) between the second end of the transmission arm (207) and the rotating part (201) of the slip ring unit (200), or
connecting the coupling element (205) between the rotating component of the wind turbine (10) and the first end of the transmission arm (207) and connecting the second end of the transmission arm (207) to the rotating part (201) of the slip ring unit (200).

15. The method of any of claims 13 or 14, wherein connecting the rotating part (201) of the slip ring unit (200) via the torque transmission system (203) comprises connecting the torque transmission system (203) to a side wall (201a) of the rotating part (201) of the slip ring unit (200), or
wherein connecting the rotating part (201) of the slip ring unit (200) via the torque transmission system (203) comprises connecting the torque transmission system (203) to a front wall (201b) of the rotating part (201) of the slip ring unit (200) at a position substantially aligned with a rotational axis of the rotating part (201) of the slip ring unit (200).
